# EUROPÄISCHE PATENTSCHRIFT

(11) **EP 2 556 778 B1**
(45) Veröffentlichungstag und Bekanntmachung des Hinweises auf die Patenterteilung: **18.06.2014**
(21) Anmeldenummer: 12177264.4
(22) Anmeldetag: 20.07.2012
(51) Int. Cl.: A47J 43/07

(54) **Über ein als Touchscreen ausgebildetes Display zu betätigende Küchenmaschine**
Kitchen appliance operated using a display in the form of a touch screen
Machine de cuisine pouvant être actionnée par un écran conçu comme un écran tactile

(30) Priorität: 27.07.2011 DE 102011052194; 04.08.2011 DE 102011052405
(43) Veröffentlichungstag der Anmeldung: 13.02.2013
(73) Patentinhaber: Vorwerk & Co. Interholding GmbH, 42275 Wuppertal (DE)
(72) Erfinder: Schomacher, Jutta, 42489 Wülfrath (DE); Hackert, Georg, Dr., 44869 Bochum (DE); Lang, Torsten, 42657 Solingen (DE); Caldewey, Uwe, 44229 Dortmund (DE); Hilgers, Stefan, Dr., 45357 Essen (DE); Kemker, Uwe, 42105 Wuppertal (DE); Wehlig, Ramona, 8810 Horgen (CH)
(74) Vertreter: Müller, Enno

(56) Entgegenhaltungen:
- DE-A1-102010 060 650
- US-A1- 2002 141 286

## Beschreibung

Die Erfindung betrifft eine über ein als Touchscreen ausgebildetes Display zu betätigende Küchenmaschinen nach den Merkmalen des Oberbegriffes des Anspruches 1,

Küchenmaschinen der in Rede stehenden Art sind bekannt, so beispielsweise aus der DE 102 10 442 A1. Diese finden insbesondere Verwendung im Haushaltsbereich, weiter insbesondere zur Bearbeitung und/oder Zubereitung von Speisen. Derartige Küchenmaschinen sind ausgelegt zur insbesondere manuellen Einstellung von Bearbeitungsparametern durch den Benutzer. Darüber hinaus sind diesbezüglich Küchenmaschinen bekannt, bei welchen insbesondere die eingestellten Parameter, weiter vorzugsweise auch insbesondere während des Zubereitungsprozesses erfasste Messwerte in einem Display angezeigt werden.

Aus der DE 10 2010 060 650 A1 ist eine Küchenmaschinen bekannt, bei der bereits ein Touchscreendisplay vorgeschlagen ist.

Ausgehend von dem zuletzt genannten Stand der Technik stellt sich der Erfindung die Aufgabe eine Küchenmaschine der in Rede stehenden Art anzugeben, die bei Beachtung der gewünschten Sicherheit eine vorteilhafte Betätigung ermöglicht.

Diese Aufgabe ist beim Gegenstand des Anspruches 1 gelöst, wobei darauf abgestellt ist, dass die Küchenmaschine eine Turbofunktion für das Rührwerk aufweist und dass die Turbofunktion durch eine Touchscreen-Betätigung auswählbar und nur durch betätigen eines mechanischen Drehwahlzählers aktivierbar ist,

Es ist eine Küchenmaschine angegeben, die sich durch eine günstige Handhabung, insbesondere hinsichtlich einer durch den Benutzer vorzunehmenden Einstellung von Prozessparametern als günstig erweist. Die Einstellung von Parametern, insbesondere bezüglich der Rührwerkdrehzahl und/oder Heizleistung und/oder der Zeitdauer, über welche das Rührwerk und/oder die Heizung mit der vorgewählten Drehzahl bzw. Temperatur arbeitet, ist bevorzugt ausschließlich über außerhalb des Displays angeordnete, mechanisch zu betätigende Schalter einstellbar. Diesbezüglich finden insbesondere Drehschalter oder Taster Verwendung, darüber hinaus bevorzugt auch Schiebeschalter. Dies erweist sich gegenüber einer allein über ein als Touchscreen ausgebildetes Display zu betätigenden Küchenmaschine dahingehend von Vorteil, dass eine entsprechende Parametereinstellung beispielsweise auch mit verschmutzten Fingern vorgenommen werden kann.

Bevorzugt weist das Display zumindest in einer ersten Displayanzeige nach Einschalten der Küchenmaschine zwei oder mehr unterschiedliche Anzeigebereiche auf, weiter bevorzugt zumindest drei Anzeigebereiche, welche die bevorzugt über die mit Bezug zu dem Display externen Schalter eingestellten Parameter bzw. Stellgrößen zeigen. Insbesondere aus Gründen der Betriebssicherheit ist ein Betrieb der Küchenmaschine, weiter insbesondere bezogen auf eine kombinierte Heiz- und Rührwerkfunktion nur dann möglich, wenn insbesondere der Benutzer die Stellgrößen Rührwerkdrehzahl, Heizleistung und Zeitdauer vorwählt, wobei die über die jeweiligen Schalter vorgewählten Parameter als Stellgrößen in dem bevorzugt als Touchscreen ausgebildeten Display erscheinen und so eine eindeutige, visuelle Kontrolle der eingestellten Parameter ermöglicht.

Auch ist diesbezüglich bevorzugt, dass eine Heizfunktion der Küchenmaschine nur in Verbindung mit einer Aktivierung des Rührwerks möglich ist, dies zweiter bevorzugt entsprechend zufolge Vorgabe von über den oder die Schalter einzustellender Stellgrößen.

Weiter bevorzugt ist das Display auch ohne gewählte Stellgrößen, das heißt weiter bevorzugt ohne Aktivierung bzw. Wiederaktivierung des Zubereitungsprozesses durch Erwärmen und/oder Rühren bzw. Zerkleinern, zum Aufrufen und/oder Ablaufen von Programmen nutzbar. Dies weiter bevorzugt in bekannter Weise zufolge Berühren des Displays mit dem Finger zumindest in einem zum Aufrufen und/oder Ablaufen von Programmen ausgewählten Anzeigebereich des Displays. Diese bevorzugt gesonderten, weiter bevorzugt insbesondere mit Bezug auf die, die Stellgrößen darstellenden Anzeigebereiche gesonderten Anzeigebereiche sind bevorzugt nutzbar zum Aufrufen vorgegebener Funktionen der Küchenmaschine, darüber hinaus bevorzugt weiter auch zur Anzeige eines oder mehrerer Bedienungsmenüs.

Bevorzugt ist diesbezüglich weiter insbesondere die Hinterlegung zumindest eines bevorzugt grafisch dargestellten Rezepts zur Zubereitung einer Speise, in welchem Rezept dem Benutzer Mengen- bzw. Gewichtsangaben für Zutaten sowie weiter bevorzugt Vorgaben für die Stellgrößen wie Rührwerkdrehzahl, Heizleistung und Zeitdauer angezeigt werden. Diesbezüglich ist weiter bevorzugt vorgesehen, dass zufolge Aufrufen über den Touchscreen eine Vielzahl von Rezepten erscheint, weiter bevorzugt unterteilt in Untermenüs.

Zudem können über den Touchscreen bevorzugt auch Hilfsprogramme aufgerufen werden. Darüber hinaus werden bevorzugt ohne eine gewählte Stellgröße quasi selbst ablaufende Programme über den Touchscreen aufgerufen, so weiter beispielsweise eine hinterlegte Rezeptsteuerung zur Zubereitung einer Speise.

In einer bevorzugten Weiterbildung ist vorgesehen, dass zufolge einer Touchscreen-Betätigung die Anzeigebereiche für die Stellgrößen verkleinert werden und/oder an dem Rand des Displays erscheinen. Entsprechend werden bevorzugt die Anzeigebereiche für die Stellgrößen in dem Moment, wo diese nicht zwingend zur vornehmlichen Informationsdarstellung dienen, aus einer optisch hervorgehobenen Darstellung in eine nebengeordnete Darstellung verändert. Dies ist insbesondere bevorzugt dann erreicht, wenn über das als Touchscreen ausgebildete Display ein Programm, beispielsweise ein Menü, weiter beispielsweise ein Rezept aufgerufen wird. Die Anzeigebereiche für die Stellgrößen werden hierbei bevorzugt auf ein Maß verkleinert, was eine entsprechende vergrößerte Darstellung des in diesem Moment mit einer höheren Priorität versehenen Anzeigebereiches führt.

So ist weiter bevorzugt zufolge Touchscreenbetätigung neben dem beispielsweise aufgerufenen Rezept und/oder Programm weiterhin eine Mehrzahl von verkleinerten Anzeigebereichen gegeben, die insbesondere die vorerwähnten Stellgrößen für die Rührwerkdrehzahl, die Heizleistung und die Zeitdauer anzeigen. Es ergibt sich hieraus weiter der Vorteil für den Benutzer, dass bevorzugt stets der zum jeweiligen Zeitpunkt für den Benutzer wichtige Anzeigebereich gegenüber den zu diesem Zeitpunkt weniger wichtigen Anzeigebereichen vergrößert darstellbar ist. So wechselt weiter bevorzugt beispielsweise bei einer vergrößerten Anzeige eines Rezepts bzw. eines Rezeptabschnittes der Anzeigebereich zumindest einer der vorerwähnten Stellgrößen weiter zumindest kurzfristig in eine vergrößerte Darstellung, sofern durch den Benutzer der für diese Stellgröße zugeordnete Schalter betätigt wird. Auch wechselt bevorzugt der Anzeigebereich einer Stellgröße in eine verkleinerte Darstellung, wenn zufolge Schalterbetätigung eine andere, dann vergrößert dargestellte Stellgröße eingestellt wird.

Auch weist bevorzugt das Display eine Scroll-Möglichkeit auf, wobei der Scroll-Fortschritt bevorzugt zugleich durch eine sich mit jedem Bild ändernde Laufleiste wiedergegeben ist. Bevorzugt erfolgt das Scrollen zufolge einer durch den Benutzer durchgeführten Berührung mit überlagertem Wischeffekt unter Nutzung des Displays als Touchscreen. Hierdurch ist in vorteilhafter Weise die Möglichkeit gegeben, beispielsweise mehrstufige Rezepte oder dergleichen über mehrere Anzeigen und somit quasi über mehrere Seiten aufzuteilen, wobei bevorzugt zwischen den so dargestellten Seiten zufolge Wischen gescrollt werden kann.

Die jeweils angezeigte Seite ist im Zusammenhang mit der Gesamtseitenzahl durch eine bevorzugt vorgesehene, sich mit jeder Seite bzw. jedem Bild ändernde Laufleiste wiedergegeben, so dass für den Benutzer in vorteilhafter Weise eine Hilfs-Anzeige gegeben ist, auf welcher Seite des Gesamtkomplexes des aktuell aufgerufenen Menüpunktes, beispielsweise Rezeptes, er sich befindet. Bevorzugt ist Laufleiste durch eine wandernde Helligkeit gegeben. Dies in bevorzugter Ausgestaltung beispielsweise zufolge Ausgestaltung der Laufleiste als in Abhängigkeit von der aktuellen Seite sich ändernder und somit bevorzugt zu- bzw. abnehmender Balkenanzeige.

Auch kann die aktuelle Position innerhalb des Menüpunktes, beispielsweise innerhalb eines mehrseitigen Rezeptes durch einen leuchtenden Strich oder dergleichen innerhalb der Laufleiste angezeigt werden. Bevorzugt ist die Helligkeit punktförmig, wobei weiter bevorzugt im Zuge eines Vorwärtsblätterns je Seite bzw. je Bild ein weiterer hell leuchtender Punkt erscheint. Weiter bevorzugt erscheint nur unmittelbar bezogen auf die aufgeschlagene Seite eine helle, punktförmige Anzeige, die entsprechend mit Scrollen der Seiten "wandert". Weiter bevorzugt ist innerhalb eines Bildes bzw. innerhalb einer bevorzugt zufolge Scrollen aufgeschlagenen Seite sowohl ein seitliches Scrollen als auch ein Auf- und Abscrollen möglich, sofern mit Bezug auf die jeweilige Richtung ein weiteres Bild bzw. eine weitere Seite vorgesehen ist. Zudem ist diesbezüglich bevorzugt bei einem seitlichen Scrollen, das heißt bei einem Scrollen von links nach rechts oder umgekehrt, ein seitenweiser Übergang der hinterlegten Bilder vorgesehen. Hingegen ist bei einem Auf- bzw. Abscrollen, das heißt bei einem Scrollen von oben nach unten bzw. von unten nach oben, bevorzugt ein dynamisches Verlagern des Bildes bzw. der Seite erreichbar, das heißt eine stufenlose Verlagerung des Bildes nach oben bzw. nach unten, zur bevorzugten Anzeige der zuvor nicht sichtbaren Bereiche im Anzeigebereich.

In einer weiter bevorzugten Ausgestaltung ist vorgesehen, dass die Küchenmaschine eine Waagenfunktion aufweist und dass die Waagenfunktion durch eine Touchscreen-Betätigung aktivierbar ist. So ist entsprechend bevorzugt hinsichtlich der Waagenfunktion in dem Display ein touchscreenartig zu betätigender Anzeigebereich vorgesehen. Dieser ist bevorzugt, gegebenenfalls mit Ausnahme einer ersten nach einem Einschalten der Küchenmaschine erscheinenden Displayanzeige, stets sichtbar, weiter bevorzugt auch stets aktivierbar. In weiterer Ausgestaltung ist weiter bevorzugt im Zusammenhang mit einem über das als Touchscreen ausgebildete Display aufrufbaren Rezept oder dergleichen die, die Waagenfunktion aktivierende Anzeige nur in Bildern bzw. Seiten des Rezeptes angezeigt, in welchen insbesondere ein Wiegen bzw. Zuwiegen von Speisezutaten erforderlich ist. Alternativ oder auch kombinativ zu einer Aktivierung der Waagenfunktion über Touchscreen-Betätigung kann hierzu in weiterer Ausgestaltung ein diesbezüglicher, zu betätigender Schalter außerhalb des Displays angeordnet sein.

Hinsichtlich der Turbofunktion für das Rührwerk leuchtet auf ein Auswählen hin bevorzugt das diesbezügliche Symbol auf. Bevorzugt wird auch maschinenintern geprüft, ob angesichts des aktuellen Betriebszustandes der Maschine eine Turbofunktion überhaupt ausgelöst werden kann. Beispielsweise kann vorgesehen sein, dass die Turbofunktion nicht ausgelöst werden kann, wenn die (vorgewählte oder gemessene) Temperatur zu hoch und/oder ein zu hoher Füllstand (beispielsweise gemäß abzuarbeitendem Rezeptschritt oder durch Messung erfasst) gegeben ist.

Darüber hinaus ist die Küchenmaschine bevorzugt mit einer Richtungsumkehrfunktion für das Rührwerk und/oder mit einer Teigrührfunktion für das Rührwerk versehen, wobei bevorzugt die Richtungsumkehrfunktion und/oder die Teigrührfunktion durch eine Touchscreen-Betätigung aktivierbar ist. Bezüglich der Turbofunktion, der Richtungsumkehrfunktion sowie der Teigrührfunktion gilt bezüglich der jeweiligen Anzeigebereiche im Display das Gleiche wie zuvor bezüglich der Waagenfunktion beschrieben. Auch hier kann alternativ oder kombinativ zu einer möglichen Touchscreen-Betätigung eine Betätigung über einen außerhalb des Displays vorgesehenen Schalter erfolgen. Bevorzugt ist weiter der jeweilige Anzeigebereich für eine Touchscreen-Betätigung der vorbeschriebenen Funktionen in einem, einem Rand des Displays zugeordneten Bereich vorgesehen, welcher bevorzugt in jeder Displayanzeige sichtbar ist oder erst bei Bedarf, beispielsweise abhängig von einem angezeigten Rezept, sichtbar wird.

Bevorzugt ist weiter, dass die Richtungsumkehr- und die Teigrührfunktion nur in Abhängigkeit mit einer Zeitdauer- und Rührwerkseinstellung auf die Drehrichtung oder Drehzahl des Rührwerks einwirkt. Entsprechend bedingt die Richtungsumkehr- und/oder die Teigrührfunktion sowohl eine Einstellung der Zeitdauer und der Rührwerkdrehzahlen, bevorzugt über außerhalb des Displays angeordnete, mechanisch zu betätigende Schalter. So ist weiter bevorzugt zunächst eine Zeitdauer- und Rührwerkseinstellung vorzunehmen, bevor die Richtungsumkehr- oder die Teigrührfunktion aktivierbar ist. In weiterer Ausgestaltung kann der Benutzer insbesondere über eine Touchscreen-Betätigung die Richtungsumkehr- bzw. die Teigrührfunktion aktivieren, wobei dies erst dann zur Wirkung kommt, wenn hiernach die Zeitdauer und die Rührwerkdrehzahl eingestellt worden sind. Auch können die Anzeigebereiche im Touchscreen-Display für die Richtungsumkehr- und die Teigrührfunktion in einer weiteren Ausgestaltung erst dann im Display erscheinen, wenn zuvor die Zeitdauer sowie die Rührwerkdrehzahl über die mechanisch zu betätigenden Schalter eingestellt sind.

Zudem erweist es sich als vorteilhaft, wenn, wie weiter bevorzugt, die Erscheinungsform des Displays zeitlich einer dieser entsprechenden Funktionseinstellung der Küchenmaschine entspricht. So ist beispielsweise bei einem über das Display als Touchscreen aufzurufenden Programm bzw. Menüpunkt, weiter beispielsweise Rezept, über die bevorzugte Scroll-Möglichkeit ein Blättern über mehrere Seiten ermöglicht. Dies erlaubt beispielsweise bei Anzeige eines mehrseitigen Rezeptes dieses zunächst zufolge scrollenden Durchblätterns zu sichten, Auch kann im Zuge eines Rezeptablaufes beispielsweise bereits die Vorschau auf die nächsten Prozessschritte vorgenommen werden. Nach Ablauf einer vorgegebenen Zeit, beispielsweise nach Ablauf von 5 bis 10 Sekunden, ohne dass der Benutzer insbesondere über das Display einen weiteren Befehl auslöst, wechselt das aktuelle Bild bevorzugt selbsttätig in das Ausgangsbild zurück, so beispielsweise auf die Seite des Rezeptes, die dem Prozessfortschritt entspricht. Auch ist hierdurch bevorzugt die Verkleinerung der Anzeigebereiche für die Stellgrößen selbsttätig erreichbar, so dass beispielsweise während der Stellgrößeneinstellung über den oder die mechanischen Schalter die entsprechenden Anzeigebereiche selbsttätig vergrößert dargestellt werden und nach erfolgter Einstellung der Parameter, gegebenenfalls unter Berücksichtigung einer Nachlaufzeit, selbsttätig verkleinert und/oder an den Rand des Displays verlagert werden.

Weiter ist bevorzugt, insbesondere hinsichtlich der Anzeigebereiche für die Stellgrößen, insbesondere für die Rührwerkdrehzahl, die Heizleistung und die Zeitdauer, diese bevorzugt hinsichtlich ihrer Farbdarstellung zu variieren. So ist in einer bevorzugten Ausgestaltung vorgesehen, dass in Abgleich mit beispielsweise in einem hinterlegten Rezept angegebenen Parametern eine entsprechende Einstellung über den jeweiligen mechanischen Schalter eine beispielsweise grün leuchtende Anzeige des entsprechenden Bereiches erst bei Erreichen des vorgegebenen Parameters erfolgt, weiter gegebenenfalls unter Berücksichtigung von vorgegebenen Toleranzen. Solange der vorgegebene Parameter unterschritten ist oder auch sobald der vorgegebene Parameter überschritten ist, leuchtet der entsprechende Anzeigebereich oder Teile hiervon bevorzugt in einer Signalfarbe, beispielsweise rot. Auch kann darüber hinaus insbesondere bezüglich der eingestellten Heizleistung eine Farbveränderung des diesbezüglichen Anzeigebereiches darstellen, ob die vorgewählte Temperatur erreicht ist oder nicht. So erscheint in einer bevorzugten Ausgestaltung der Temperatur-Anzeigebereich in einer roten Farbe, sobald die im oder am Rührgefäß gemessene Temperatur der eingestellten Temperatur entspricht, während bis zum Erreichen dieser Temperatur der entsprechende Anzeigebereich beispielsweise grün erscheint. Auch ist ein fließender Farbübergang diesbezüglich möglich, beispielsweise ausgehend von grün über gelb, orange bis hin zu rot für die erreichte Heiztemperatur.

Auch ist ergänzend bevorzugt vorgesehen, dass auf dem Display beispielsweise Warnhinweise erscheinen, so beispielsweise der Hinweis darauf, dass die Heizung nicht ohne Zeitvorwahl einstellbar ist bzw. die Küchenmaschine ohne entsprechende Einstellung der Zeitvorwahl nicht arbeitet.

Die Waagenfunktion kann jederzeit aktiviert werden. Zufolge einer Aktivierung wird eine zusätzlich auf die Küchenmaschine aufgebrachte Masse, insbesondere eine in das Rührgefäß eingebrachte Masse, hinsichtlich ihres Gewichtes, bspw. in Gramm und/oder Kilogramm, angezeigt. Alternativ kann auch ein Restgewicht einer noch einzugebenden Masse angezeigt werden. Beispielsweise im Fall, dass 100 Gramm Zucker einzugeben sind, kann auf eine gewisse Zugabe von Masse hin auf dem Bildschirm 60 Gramm angezeigt werden, was dem Benutzer die Information gibt, dass noch 60 Gramm einzugeben sind. Hierbei ist durch die Waagenfunktion zufolge der Aktivierung schon das vor Eingabe einer Masse vorhandene Gewicht erfasst und im Folgenden abgezogen worden. Alternativ kann hinsichtlich der Zugabe auch die tatsächlich bereits eingegebene Menge (jeweils) angezeigt werden, also in dem Beispielsfall 40 Gramm (wobei auch hierbei das gemessene Ausgangsgewicht von einem zu diesem Zeitpunkt erfassten Gesamtgewicht ersichtlich abgezogen wurde).

Die Aktivierung kann bspw. durch Berühren eines auf dem Touchscreen erscheinenden Waagensymbols erfolgen und/oder durch Betätigen eines Waagen-Schalters, -Tasters oder dergleichen.

Die Waagenfunktion kann ergänzend oder alternativ auch selbsttätig im Rahmen einer Rezeptabarbeitung durch die Küchenmaschine aktiviert werden. Wenn in einem Rezeptschritt bspw. eine Zugabe einer bestimmten Menge bzw. Masse zu erfolgen hat, kann die Maschine den Waagenmodus aktivieren, so dass der Benutzer lediglich die Menge zuzugeben hat und sogleich eine entsprechende Gewichts-Anzeige erfolgt.

Durch eine Quittierung, bspw. durch Berühren des Waagensymbols oder durch Betätigen eines Schalters, aber ggf. auch allein durch Erreichen der vorgegebenen Zugabemenge kann wieder eine Deaktivierung der Waagenfunktion erfolgen.

Bevorzugt ist im Weiteren im vorliegenden Zusammenhang vorgesehen, dass jegliche Funktion der Küchenmaschine, welche die Aktivierung eines oder des Motors, insbesondere Elektromotors, der Küchenmaschine erfordert, nur durch einen von Hand zu betätigenden Schalter, insbesondere Drehschalter, erfolgen kann. Insbesondere kann über den Touchscreen demzufolge keine Rührwerksdrehzahl aktiviert werden oder die Turbofunktion aktiviert werden. Wohl aber kann bspw. eine bestimmte Drehzahl über den Bildschirm ggf. vorgewählt werden. Über die Betätigung eines Schalters ist dann aber das tatsächliche Laufen des Rührwerks mit dieser Drehzahl nur auslösbar.

Gleiches gilt bevorzugt auch hinsichtlich der Einstellung einer Aufheiztemperatur. Hierbei kann vorgesehen sein, dass jegliche Heiztemperatur zwar ggf. in der beschriebenen Weise am Bildschirm vorwählbar ist, aber tatsächlich aktivierbar nur über die Taster- bzw. Schalterbetätigung ist. Alternativ kann auch vorgehen sein, dass bis zu einer vorgegebenen Grenztemperatur von bspw. 40 oder 60 Grad eine Vorwahl und Aktivierung der Aufheiztemperatur über den Bildschirm möglich ist, bezüglich darüber liegenden Temperaturen dann aber wie vorstehend beschrieben zu verfahren ist.

Bevorzugt ist als von Hand zu betätigender Schalter auch ein oder mehrere oder nur Dreh-Drückgeber vorgesehen. Hierbei kann eine Drehung für eine übliche Aktivierung bspw. einer Drehzahl oder einer Aufheiztemperatur vorgesehen sein, ein Drücken aber für ein Ausschalten bspw. der betreffenden Drehzahl oder der betreffenden Temperatur vorgesehen sein. Dies insbesondere, und hierbei auch vorteilhaft, als Not-Aus nutzbar, ergänzend zu einer über ein Drehen erreichbaren Einstellung "Null".

Weiter bevorzugt ist auch vorgesehen, dass ein längeres Drücken auf einen, mehrere oder jeden der vorgesehenen (und insbesondere allein als von Hand zu betätigende gesonderte Schalter - neben dem Touchscreen ggf. - ausgebildete Betätigungselemente) die Küchenmaschine insgesamt deaktiviert. "Länger" kann bspw. einen Zeitraum von 1 bis 5 Sekunden bedeuten.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in Ansicht eine Küchenmaschine der in Rede stehenden Art mit einem in einer Rührgefäßaufnahme aufgenommenen Rührgefäß, mechanischen Schaltern zur Einstellung von Stellgrößen sowie einem als Touchscreen ausgebildeten Display, eine erste Ausführungsform betreffend;

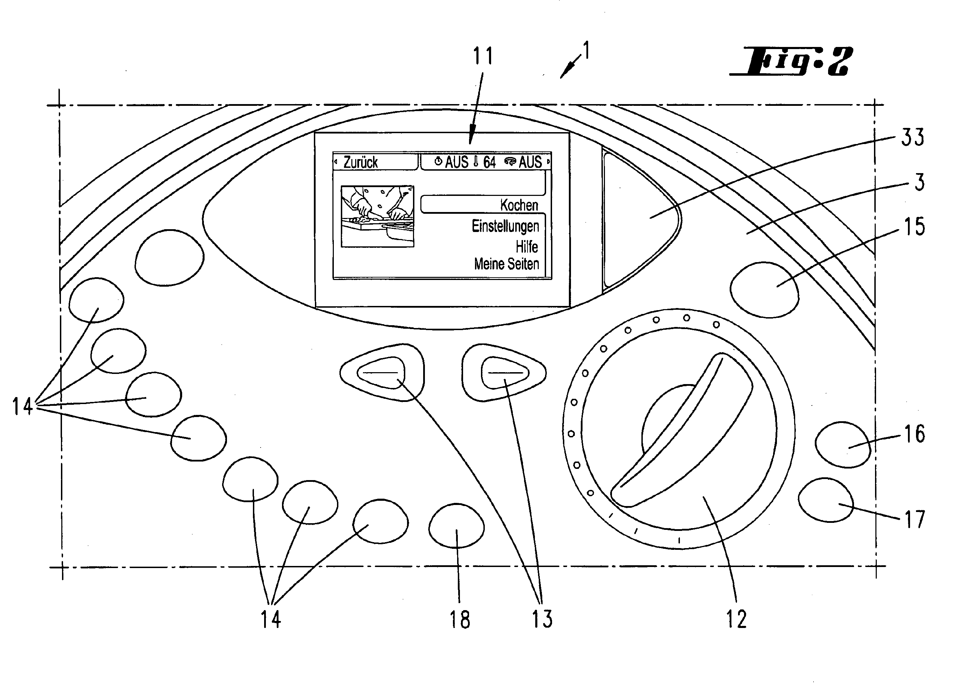

- Fig. 2: die Herausvergrößerung des das Display und die Schalter aufweisenden Bedienfeldes der Küchenmaschine;
- Fig. 3: in schematischer Darstellung das Display in einer bevorzugten ersten Displayanzeige;
- Fig. 4: eine der Fig. 3 entsprechende Darstellung, jedoch bei Einstellung einer Zeitdauer durch einen Schalter;
- Fig. 5: eine Folgedarstellung zu Fig. 4 bei Einstellen der Heizleistung über einen weiteren Schalter;
- Fig. 6: eine Folgedarstellung zu Fig. 5 bei Einstellen einer Rührwerkdrehzahl bzw. Rührwerkdrehstufe über einen weiteren Schalter;
- Fig. 7: eine weitere der Fig. 3 entsprechende Darstellung, eine Zwischenstellung im Zuge eines Zubereitungsprozesses mit den vorgegebenen Stellgrößen Rührwerkdrehzahl, Heizleistung und Zeitdauer betreffend;
- Fig. 8: das Display nach Aufrufen eines Menüs;
- Fig. 9: eine Folgedarstellung zu Fig. 8, ein Untermenü betreffend;
- Fig. 10: eine Folgedarstellung zu Fig. 9, ein weiteres Sub-Menü betreffend;
- Fig.11: das Display mit einer ein ausgewähltes Rezept betreffenden Displayanzeige;
- Fig. 12: eine Folgedarstellung zu Fig. 11, eine erste Rezeptseite betreffend;
- Fig. 13: eine Folgedarstellung zu Fig. 12, eine Zwischenstellung im Zuge eines horizontalen Scrollens von einer ersten Seite zu einer zweiten Seite des Rezeptes betreffend;
- Fig. 14: eine der Fig. 12 entsprechende Darstellung, jedoch die zweite Rezeptseite betreffend;
- Fig. 15: eine Folgedarstellung zu Fig. 14, mit einer die nächste Rezeptseite betreffenden Displayanzeige;
- Fig. 16: das Display in einer eine Waagenfunktion betreffenden Displayanzeige, insbesondere den Vorgang eines Waagenresets betreffend;
- Fig. 17: eine der Fig. 16 entsprechende Darstellung, jedoch die Reset-Stellung der Waage betreffend;
- Fig. 18: eine der Fig. 17 entsprechende Darstellung, jedoch eine Zwischenstellung im Zuge des Wiegevorganges betreffend;
- Fig. 19: die Waage-Displayanzeige bei Erreichen des vorgegebenen Gewichts;
- Fig. 20: eine weitere der Fig. 15 entsprechende Darstellung, jedoch im Zuge der Einstellung der Zeitdauer über einen der mechanischen Schalter;
- Fig. 21: eine der Fig. 20 entsprechende Darstellung, jedoch im Zuge der Einstellung einer Rührwerkdrehzahl bzw. Rührwerkdrehstufe über einen der mechanischen Schalter;
- Fig. 22: eine der Fig. 15 entsprechende Darstellung, nach Beendigung des Rezeptschrittes;
- Fig. 23: eine der Fig. 2 entsprechende Ausschnittdarstellung, eine zweite Ausführungsform betreffend und
- Fig. 24: eine weitere der Fig. 2 entsprechende Darstellung, betreffend eine dritte Ausführungsform.

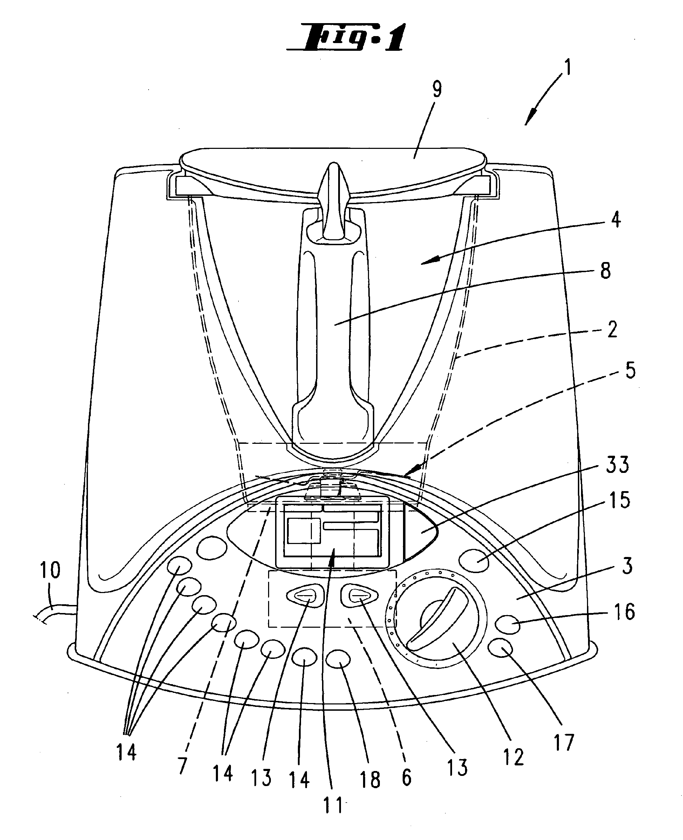

Dargestellt und beschrieben ist zunächst mit Bezug zu Fig. 1 eine Küchenmaschine 1 in einer ersten Ausführungsform mit einer Rührgefäß-Aufnahme 2 und einem Bedienfeld 3.

Der Küchenmaschine 1 ist ein Rührgefäß 4 zuordbar, in dem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden 7 zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk verbleibt in dem Rührgefäß 4 auch bei Entnahme desselben aus der Rührgefäß-Aufnahme 2, wozu weiter bevorzugt das Rührwerk 5 in der Zuordnungsstellung über eine drehfeste Steckkupplung mit dem Elektromotor 6 verbunden ist.

Der Boden 7 des Rührgefäßes 4 ist bevorzugt beheizbar zur Erhitzung eines in dem Rührgefäß 4 befindlichen Garguts. Bevorzugt kommt hier eine elektrische Widerstandsheizung zum Einsatz, welche in dem Boden 7 des Rührgefäßes 4 integriert ist.

Das Rührgefäß 4 ist bevorzugt topfartig mit im Wesentlichen kreisrundem Querschnitt ausgebildet, bei sich zur Topföffnung, das heißt nach oben hin konisch erweiterndem Querschnitt. Die Topfwandung besteht bevorzugt aus einem Metallwerkstoff.

Weiter weist das Rührgefäß 4 einen senkrecht ausgerichteten Haltegriff 8 auf, welcher sockelseitig sowie topfrandseitig an dem Rührgefäß 4 festgelegt ist.

Das Rührgefäß 4 wird der Küchenmaschine 1 bevorzugt derart zugeordnet, dass der Haltegriff 8 sich freistehend zwischen Gerätegehäuse-Backen, dem Bedienfeld 3 zugewandt, erstreckt, wobei der Sockelbereich des Rührgefäßes sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung.

Auf das Rührgefäß 4 wird ein Gefäßdeckel 9 aufgesetzt, welcher im Betrieb der Küchenmaschine 1, weiter insbesondere im Betrieb des Rührwerks 5 und/oder der bodenseitigen Heizung verriegelt ist, weiter bevorzugt an dem Gehäuse der Küchenmaschine 1. Zentral besitzt der Gefäßdeckel 9 eine nicht dargestellte Einfüllöffnung.

Die Elektroversorgung des Elektromotors 6 sowie der weiter bevorzugt rührgefäßbodenseitig vorgesehenen Heizung und darüber hinaus auch der elektrischen Steuerung des Gesamtküchenmaschine 1 ist über ein Netzanschlusskabel 10 erreicht.

In dem Bedienfeld 3 ist zunächst ein bevorzugt als Touchscreen ausgebildetes Display 11 vorgesehen. Weiter trägt das Bedienfeld 3 mechanische Schalter und Regler zum Einstellen unterschiedlicher Stellgrößen für den Betrieb der Küchenmaschine 1. So ist zunächst ein Drehschalter 12 vorgesehen, zur Einstellung der Drehzahl des Rührwerks 5, wobei bevorzugt über den Drehschalter 12 Rührwerkdrehzahlstufen angewählt werden, wobei jeder Rührwerkdrehzahlstufe eine vorgegebene Rührwerkdrehzahl zugeordnet ist.

In dem dargestellten Ausführungsbeispiel bevorzugt unterhalb des Displays 11 sind zwei mechanische Schalter in Form von Tasten 13 vorgesehen, mittels welchen eine Zeitdauer als Stellgröße eingegeben werden kann, über welche Zeitdauer bevorzugt das Rührwerk 5 und/oder die bodenseitige Heizung des Rührgefäßes 4 aktiviert wird.

Darüber hinaus ist eine Reihe von mechanischen Schaltern in Form von Tasten 14 vorgesehen, über welche unterschiedliche, vorgegebene Temperaturen wählbar sind, so weiter bevorzugt Temperaturen von 37° C bis hin zu 100° C. Mit der hierüber gewählten Temperatur und der gegebenenfalls über den Drehschalter 12 gewählten Rührwerkdrehzahl wird das sich in dem Rührgefäß 4 befindliche Gargut über den mittels der Tasten 13 vorgegebenen Zeitraum mit Wärme beaufschlagt.

Zudem sind in dem Bedienfeld 3 weitere Tasten zum Aufrufen hinterlegter Sonderfunktionen vorgesehen, so insbesondere eine Taste 15 zur Aktivierung einer Turbofunktion, bei welcher kurzzeitig, das heißt bevorzugt über einen Zeitraum von 1 bis 3 Sekunden, weiter bevorzugt über einen dem Zeitraum der Tastenbeaufschlagung entsprechenden Zeitraum das Rührwerk 5 mit einer Höchstdrehzahl betrieben wird. So führt weiter bevorzugt die Turbofunktion zu einer kurzzeitigen Drehzahl des Rührwerks 5 von mehr als 10000 U/min, weiter bevorzugt mehr als 12000 U/min.

Eine weitere Taste 16 dient zur Aktivierung einer Richtungsumkehrfunktion für das Rührwerk 5. Dreht das Rührwerk 5 im üblichen Betrieb bevorzugt im Rechtslauf, so ist zufolge Betätigung der Taste 16 die Umschaltung auf einen Linkslauf ermöglicht, wobei weiter bevorzugt diese Drehrichtungsumkehr bis zum Ablauf des über die Tasten 13 vorgegebenen Zeitraumes beibehalten wird. Weiter bevorzugt schaltet die Elektronik der Küchenmaschine 1 selbsttätig in die Standard-Drehrichtung um. Auch ist durch eine nochmalige Betätigung der Taste 16 während des Rührwerkbetriebs eine erneute Drehrichtungsumkehr durchführbar.

Zum Weiteren ist eine Taste 17 vorgesehen, zur Aktivierung einer Teigrührfunktion, welche insbesondere bei der Herstellung schwerer Hefe- und Brotteige zur Anwendung kommt.

Die über den Drehschalter 12 sowie über die Tasten 13 bis 17 einzustellenden Stellgrößen bzw. aufzurufenden Funktionen sind bevorzugt, wie nachstehend näher ausgeführt, in dem Display 11 anzeigbar.

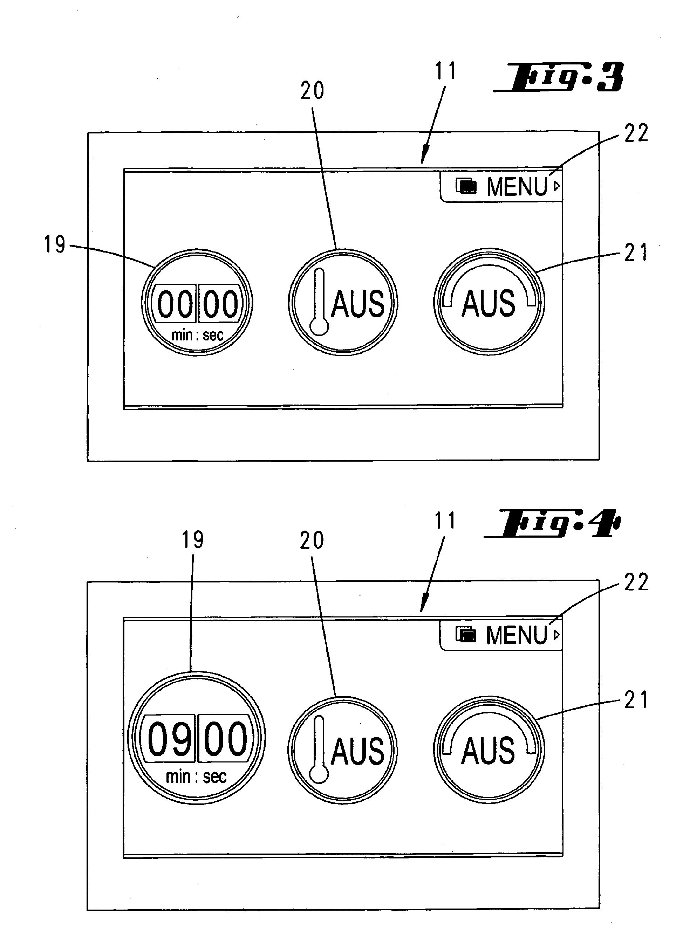

Mit Inbetriebnahme der Küchenmaschine 1, das heißt insbesondere mit Einschalten derselben bevorzugt über eine weitere Taste 18, erfolgt bevorzugt zunächst eine Selbstprüfung der in der Küchenmaschine 1 integrierten Elektronik sowie der das Display 11 steuernden Software, welche hiernach entsprechend geladen wird. Nach vollständigem Starten der Software erscheint in dem Display 11 zunächst eine erste Displayanzeige gemäß der Darstellung in Figur 3. Diese zeigt bevorzugt zunächst drei unterschiedliche Anzeigebereiche 19 bis 21, die Grund-Stellgrößen wiedergebend. Die drei Anzeigebereiche 19 bis 21 sind jeweils kreisscheibenflächenartig dargestellt, dies weiter bevorzugt in Nebeneinanderanordnung. Hierbei zeigt der Anzeigebereich 19 bevorzugt die insbesondere über die Tasten 13 eingestellte Zeit an. Bevorzugt wird hierüber während des Betriebes der Küchenmaschine 1, insbesondere während eines Rührwerk- und/oder Heizbetriebes auch die noch verbleibende Restlaufzeit angezeigt.

Der bevorzugt in dem Display 11 mittig angeordnete Anzeigebereich 20 dient zur Darstellung der insbesondere über die Tasten 14 vorgewählten Heiztemperatur, während der weitere Anzeigebereich 21 zur Darstellung der über den Drehschalter 12 vorgewählten Rührwerkdrehzahlstufe dient.

Darüber hinaus ist in der ersten Displayanzeige gemäß Figur 3 auch ein Tastfeld 22 vorgesehen, über welches zufolge Berühren desselben ein nachstehend näher beschriebenes Menü aufrufbar ist. Entsprechend ist das Display 11 bevorzugt auch aus der ersten Displayanzeige gemäß Figur 3 heraus als Touchscreen nutzbar, wenngleich bevorzugt diese Touchscreenfunktion sich in der ersten Displayanzeige gemäß Figur 3 allein auf das, das Menü aufrufende Tastfeld 22 beschränkt.

Aus dieser ersten Displayanzeige heraus kann die Küchenmaschine 1 genutzt werden. Nach Einfüllen entsprechender Gargüter und/oder Zutaten in das Rührgefäß 4, weiter nach Verschluss des Rührgefäßes 4 durch den Gefäßdeckel 9 ist die Küchenmaschine 1 vorbereitet zur Inbetriebnahme. Die Küchenmaschine 1 ist geeignet zum Garen von Speisen oder auch zur Vorbereitung von Lebensmitteln, welche gegebenenfalls in einem weiteren Schritt gegart werden. So ist insbesondere die Küchenmaschine 1 nur im Rührwerkbetrieb nutzbar oder, wie weiter bevorzugt, in einem kombinierten Heiz- und Rührwerkbetrieb. In den Figuren ist das Display 11 zur Vorbereitung und Abarbeitung eines solchen kombinierten Betriebs dargestellt. Ein solcher kombinierter Heiz- und Rührwerkbetrieb ist nur möglich, wenn neben der Rührwerkdrehzahl und der Heizleistung auch die Zeitdauer vorgewählt ist.

So ist bevorzugt zunächst die Zeitdauer mittels der Tasten 13 einzustellen, woraufhin bei entsprechender Betätigung der Tasten 13 der diesbezügliche Anzeigebereich 19 gegenüber den weiteren Anzeigebereichen 20 und 21 vergrößert erscheint (vgl. Figur 4). Der Vergrößerungsfaktor beträgt bevorzugt 1,5 bis 2.

Die vergrößerte Darstellung des Anzeigebereiches 19, wie weiter auch eine entsprechend vergrößerte Darstellung der weiteren Anzeigebereiche 20 und 21, wird bevorzugt solange beibehalten, bis das Einstellen einer anderen Stellgröße erfolgt. Alternativ wird bevorzugt, den zuvor aktiven Anzeigebereich selbsttätig nach Ablauf einer Nachlaufzeit von beispielsweise 2 bis 3 Sekunden nach einer letzten Betätigung der entsprechenden Tasten oder Schalter in die Ursprungsgröße zu verringern.

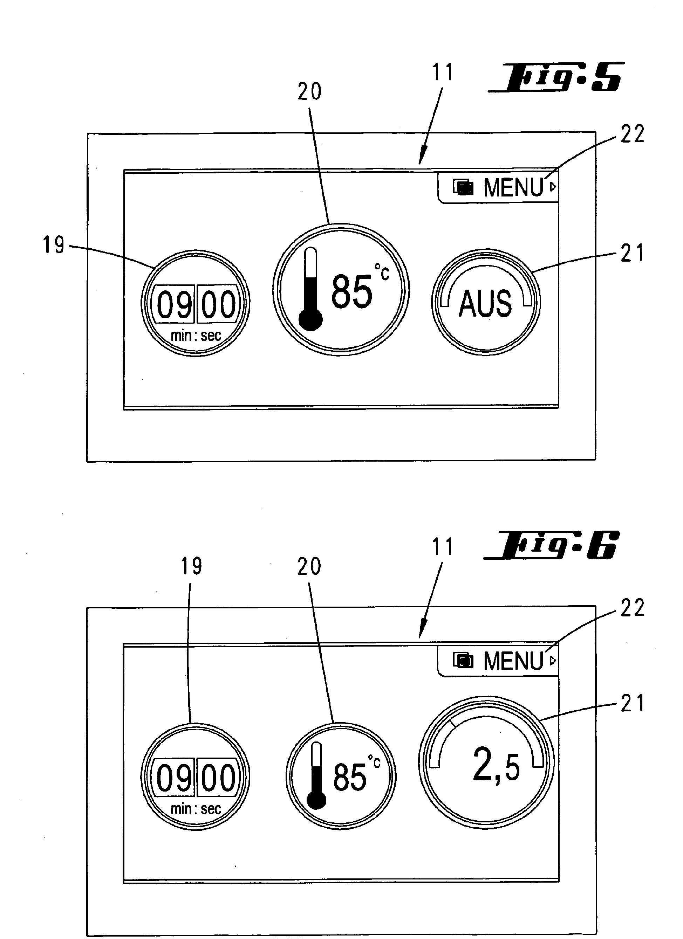

Gemäß der Darstellung in Figur 5 ist der Anzeigebereich 19 für die Zeitdauer verkleinert, dies zufolge Betätigung insbesondere einer der Tasten 14 für die Temperatureinstellung. Der diesbezügliche Anzeigebereich 20 ist gegenüber den weiteren Anzeigebereichen 19 und 21 bevorzugt um den vorbeschriebenen Faktor vergrößert. Wie auch in dem die Zeitdauer anzeigenden Anzeigebereich 19 erscheint auch in dem Temperatur-Anzeigebereich 20 die eingestellte Stellgröße bevorzugt numerisch, wobei weiter, wie dargestellt, bevorzugt ist, neben der numerischen Darstellung auch eine grafische Darstellung innerhalb des Anzeigebereiches 20 vorzusehen. Dies weiter bevorzugt in Form eines stilisierten Thermometers.

Schließlich wird für den kombinierten Heiz- und Rührwerkbetrieb die Rührwerkdrehzahl mittels des Drehschalters 12 eingestellt, woraufhin der entsprechende Anzeigebereich 21 vergrößert dargestellt ist, während der Anzeigebereich 20 der zuvor eingestellten Temperatur-Stellgröße wieder auf das Ursprungsmaß reduziert ist.

Auch die gewählte Rührwerkdrehstufe ist bevorzugt numerisch in dem Anzeigebereich 21 dargestellt, darüber hinaus bevorzugt zugleich auch grafisch in Form eines konzentrisch zum kreisförmigen Anzeigebereich 21 ausgerichteten, halbkreisförmigen Laufbalkens.

Weiter bevorzugt unmittelbar mit Wahl der gewünschten Rührwerkdrehstufe wird die Küchenmaschine 1 in Betrieb genommen. Das sich in dem Rührgefäß 4 befindliche Gargut wird entsprechend auf die vorgewählte Temperatur erhitzt und hierbei mit der gewählten Drehstufe gerührt, dies weiter über den vorgegebenen Zeitraum.

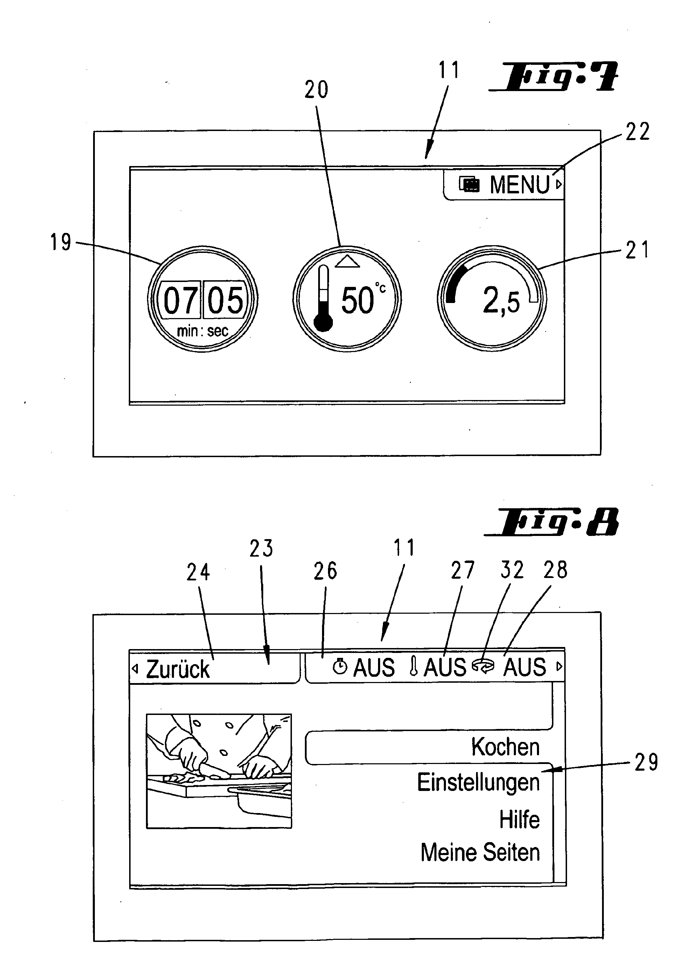

In Figur 7 ist das Display 11 in der ersten Displayanzeige in einer Zwischenstellung während des eingestellten Prozessablaufes dargestellt. Der Anzeigebereich 19 zeigt die verbleibende Rest-Zeitdauer bis zur Beendigung des Zubereitungsprozesses, während der Anzeigebereich 20 die aktuelle Temperatur im bzw. am Rührgefäß 4 anzeigt. Dies bevorzugt in Form einer numerischen Anzeige des aktuellen Temperaturzustandes. Weiter bevorzugt ist in dem Anzeigebereich 20 ein weiteres Symbol angeordnet (bevorzugt ein nach oben weisender Pfeil), welches dem Benutzer einen Hinweis darauf gibt, dass die vorgewählte Temperatur gemäß der Darstellung in Figur 5 noch nicht erreicht ist. Auch ist bevorzugt vorgesehen, das in dem Anzeigebereich 20 stilisierte Thermometer farbig zu hinterlegen, so beispielsweise von unten nach oben gemäß der aktuell vorherrschenden Temperatur rot ansteigend, während die noch zu überbrückende Temperaturdifferenz beispielsweise grün erscheint.

Mit Ablauf des über die Stellgrößen gewählten Zubereitungsprozesses zeigen die Anzeigebereiche 19 bis 21 bevorzugt die Ausgangsstellung gemäß Figur 3 an.

Auch ohne die Wahl der vorbezeichneten Stellgrößen, wie Rührwerkdrehzahl, Heizleistung und Zeitdauer, ist das Display 11 nutzbar, weiter insbesondere als Touchscreen. Über das Tastfeld 22 ist ein, wie auszugsweise in Figur 8 dargestelltes Menü aufrufbar. Hiernach stellt sich eine zweite Displayanzeige gemäß Figur 8 ein, mit einer bevorzugt in jeder weiteren aufrufbaren Displayseite stets erscheinenden, kopfseitigen Statuszeile 23 mit verschiedenen Tastfeldern 24 und 25 sowie verkleinerten Anzeigebereichen 26 bis 28 für die Zeitdauer, die Heizleistung bzw. Temperatur und Rührwerkdrehzahl.

Das Hauptfeld des Displays 11 ist im Wesentlichen in zwei nebeneinander angeordnete Displaybereiche unerteilt. Im linken Displaybereich ist bevorzugt eine Grafik dargestellt, während im rechten Displaybereich nach Aufrufen des Menüs über das Tastfeld 22 eine Menüwahl 29 erscheint. Die in dem linken Displaybereich dargestellte Grafik ist bevorzugt angepasst an einen jeden Menüpunkt in der Menüwahl 29 gewählt.

Die einzelnen Menüpunkte der Menüwahl 29 sind zufolge Berühren mit dem Finger anwählbar, dies weiter entsprechend der Funktion eines Touchscreens. Ist die Menüwahl 29 hinsichtlich der aufgeführten Menüpunkte so groß gewährt, dass diese nicht vollständig anzeigbar ist, kann in bekannter Weise nach oben und/oder nach unten gescrollt werden, dies entsprechend zufolge Fingerwischen über das Display 11.

Dargestellt ist in den weiteren Zeichnungen der Ablauf des Menüpunktes "Kochen" in der Menüwahl 29.

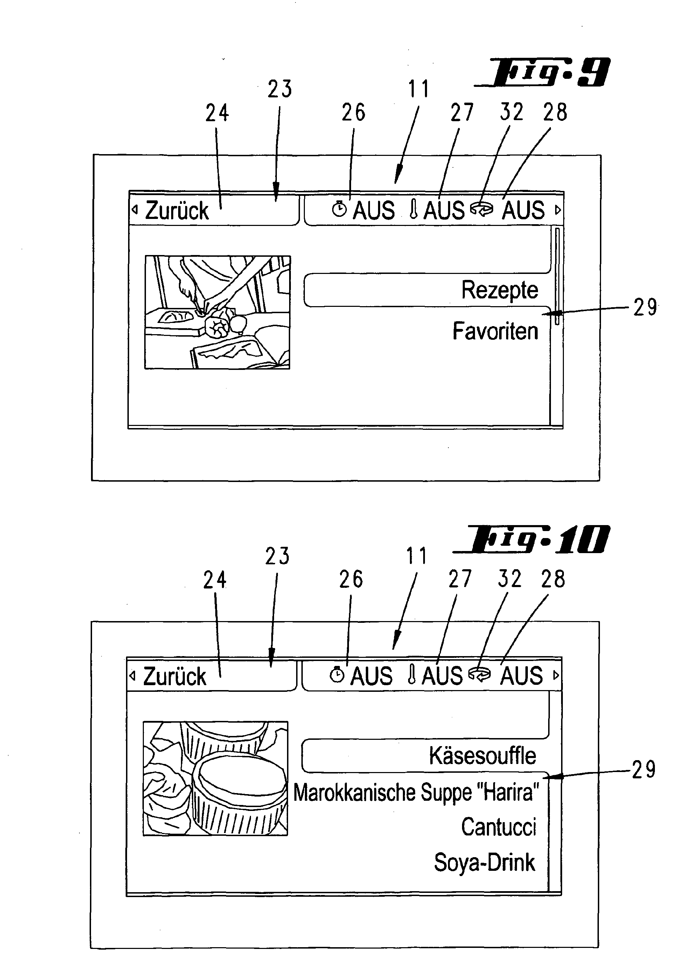

Es erscheint daraufhin gemäß der Darstellung in Figur 9 ein Untermenü, so wie dargestellt beispielsweise zur Auswahl zwischen Rezepten und Favoriten (bevorzugte und markierte Rezepte des Benutzers).

Mit Berühren des Menüpunktes "Rezepte" in dieser Menüwahl 29 erscheint, gegebenenfalls nach einer weiteren Unterteilung des Menüs in Untermenüs, eine Auswahl von Rezeptvorschlägen, wobei auch hier bevorzugt bei einer nicht vollständig anzeigbaren Menge an Menüpunkten ein Scrollen nach oben und/oder unten ermöglicht ist.

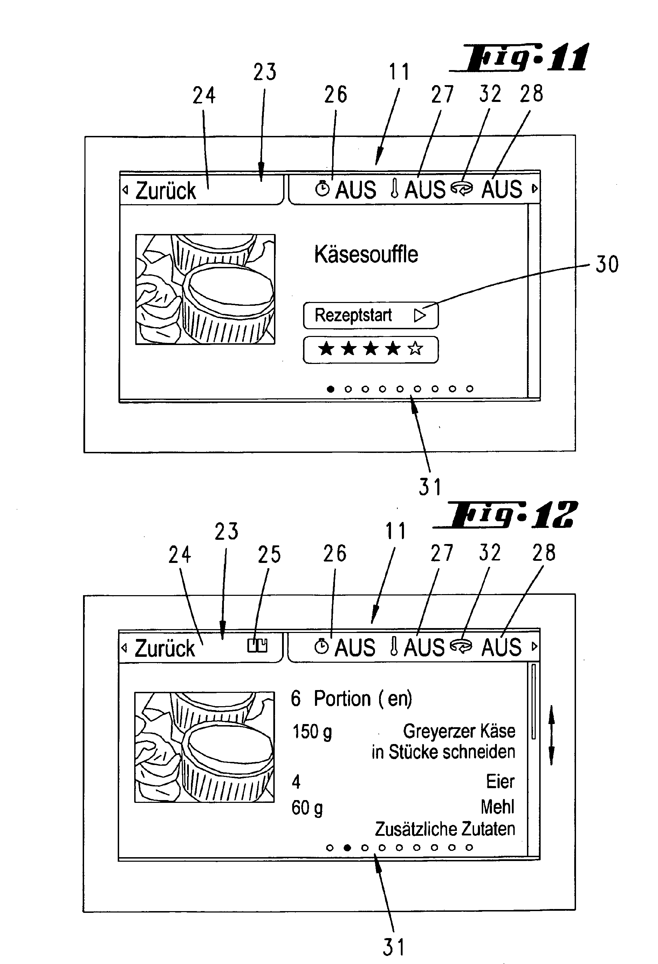

In Figur 11 ist das Display 11 in einer Stellung gezeigt, nachdem über die Menüwahl 29 gemäß Figur 10 ein Rezept aufgerufen wurde. In der linken Hälfte des Displays 11 ist eine grafische Darstellung zu dem gewählten Menü gezeigt, während in der rechten Hälfte des Displays 11 ein Tastfeld 30 zum Starten des Rezepts generiert ist. Eine hierunter dargestellte Grafik stellt bevorzugt die sich aus den vorangegangenen Rezeptauswahlen ergebende Beliebtheit dieses Rezepts dar.

Fußseitig ist in dem Display 11 eine Laufleiste 31 dargestellt, dies weiter in Form von sich in ihrer Helligkeit ändernden Punkten.

Über das in der Statuszeile 23 generierte Tastfeld 24 ("zurück") ist bevorzugt jederzeit ein Zurückblättern in die vorangegangene Menüwahl 29 bzw. auf die vorangegangene Seite der Displayanzeige zurückzuwechseln.

Die verkleinerten Anzeigebereiche 26 bis 28 für die Zeitdauer, die Temperatur und die Drehzahl zeigen neben den bevorzugten numerischen Werten zugleich auch eine eindeutige Grafik, damit der numerische Wert leicht für den Benutzer der entsprechenden Stellgröße zuordbar ist. Zudem ist insbesondere neben dem die Drehzahl darstellenden Anzeigebereich 28 ein Symbol 32 dargestellt, zur Anzeige der über die Taste 16 aktivierbaren Richtungsumkehrfunktion für das Rührwerk 5.

Die in Figur 11 dargestellte Seite des ausgewählten Rezepts stellt zugleich die erste Seite der gesamten Rezeptseiten dar. Entsprechend ist in der Laufleiste 31 der erste Punkt in seiner Helligkeit verstärkt, leuchtet bevorzugt allein, während die weiteren Punkte der Laufleiste 31 ausgeschaltet oder, wie weiter bevorzugt, nicht sichtbar sind. Blättert der Benutzer durch das Rezept, so wird über die Laufleiste 31 jeweils vermittelt, auf welcher Seite er sich befindet.

Mit Berühren des Tastenfeldes 30 ("starte Rezept") wird das ausgewählte Rezept aufgerufen, welches entsprechend Hinweise auf die Zutaten, die Zubereitungsschritte und weiter bevorzugt auf die Nährwerte gibt.

So erscheint weiter bevorzugt gemäß der Darstellung in Figur 12 zunächst auf einer zweiten Seite des Rezepts eine Auflistung der für dieses Rezept benötigten Zutaten, weiter bevorzugt in Abhängigkeit von einer vorgegebenen Portionsanzahl. Aus dieser Darstellung gemäß Figur 12 heraus kann nunmehr zufolge Wischen nach links und/oder nach rechts innerhalb des Rezeptes durch die einzelnen Seiten bzw. Anzeigen gescrollt werden, wobei weiter bevorzugt innerhalb einer aufgerufenen Seite gegebenenfalls auch zusätzlich noch ein Scrollen nach oben und/oder nach unten möglich ist.

So kann der Benutzer ohne unmittelbar nach Aufrufen des Rezeptes mit dem Zubereitungsvorgang beginnen zu müssen, zunächst das gesamte Rezept beispielsweise durchlesen und/oder sich über die Nährwerte informieren, darüber hinaus prüfen, ob die benötigten Zutaten vorrätig sind.

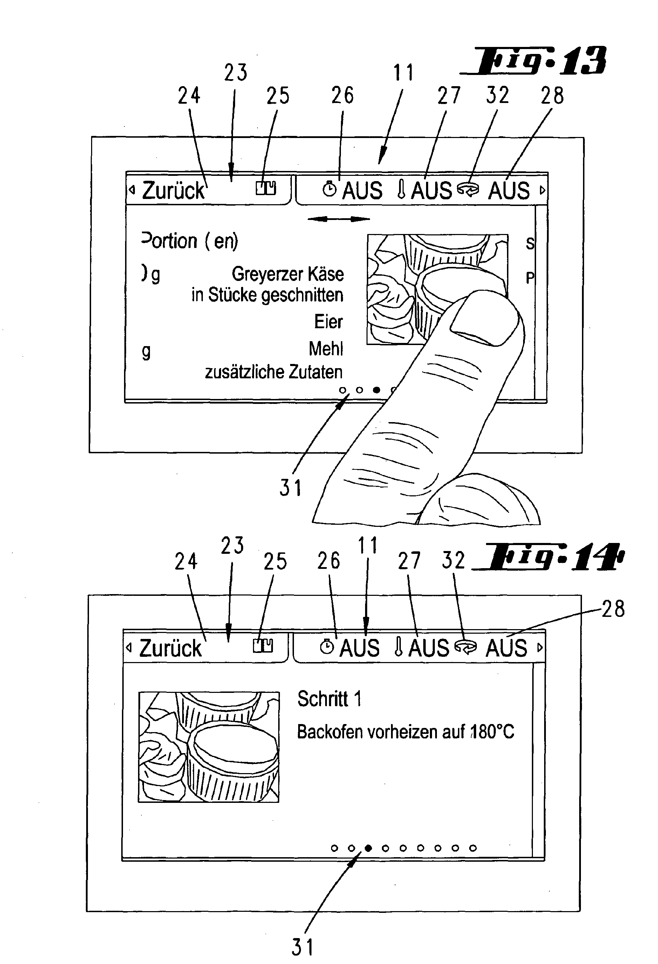

Gemäß der Darstellung in Figur 14 können auch Hinweise dargestellt werden, die nicht unmittelbar mit einer Zubereitung der Speise unter Zuhilfenahme der Küchenmaschine 1 in Verbindung stehen, so beispielsweise, wie dargestellt, der Hinweis darauf, dass ein Backofen oder der gleichen, vorgeheizt werden soll.

Auch während des Zubereitungsprozesses, so beispielsweise während einer Vorbereitung von Zutaten unter Zuhilfenahme der Küchenmaschine 1, beispielsweise Zerkleinern von Lebensmitteln, kann der Benutzer durch Vorscrollen sich bereits vorab darüber informieren, welche Arbeitsschritte als nächstes folgen. Um schneller und zielgerichtet wieder in den aktuellen Rezeptablaufpunkt zu gelangen, ist in der Statuszeile 23 zumindest zeitweise ein Tastfeld 25 generiert, welches als Lesezeichen dient. Über dieses Lesezeichensymbol wechselt die Anzeige im Display 11 zurück auf den letzten, gegebenenfalls in Bearbeitung stehenden Rezeptpunkt. Bevorzugt wechselt die Anzeige nach Ablauf einer vorgegebenen Zeit, bspw. 10 bis 30 Sekunden, selbsttätig zurück, sofern in dieser Zeit keine Display- oder Schalterbetätigung durch den Benutzer erfolgt.

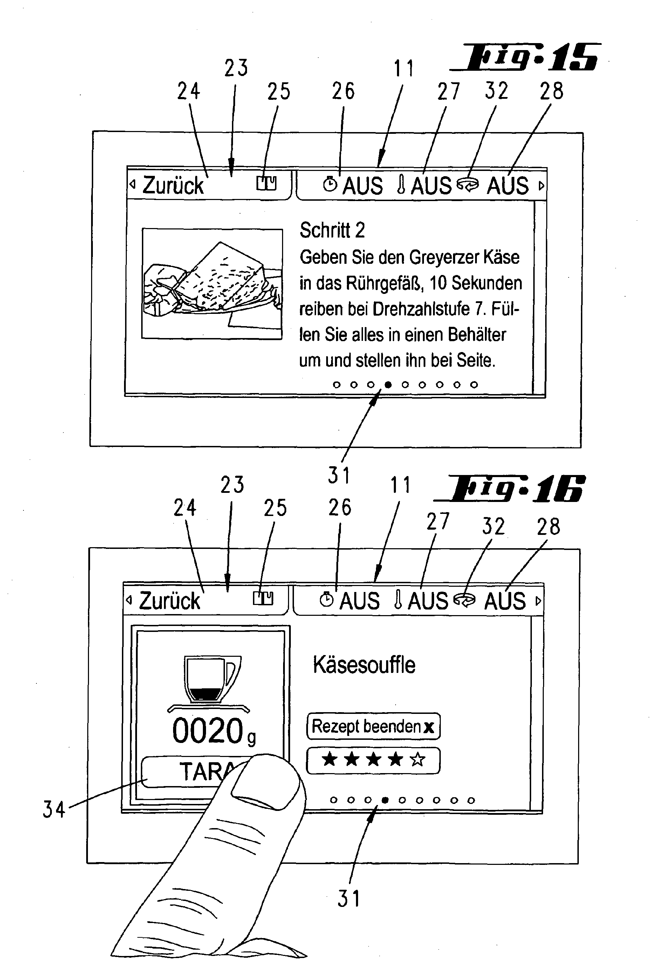

Ein solcher Rezeptpunkt ist beispielsweise in Figur 15 dargestellt. Dem Benutzer wird unter Anzeige einer passenden Grafik im linken Bereich des Displays 11 eine Unterstützung im Hinblick auf die Zubereitung gegeben, insbesondere indem diesem bevorzugte Stellgrößen zur Zubereitung in diesem Rezeptschritt angegeben werden. So ist in dem dargestellten Ausführungsbeispiel zur Herstellung des ausgewählten Rezepts zunächst die Zerkleinerung von in der Übersicht gemäß Figur 12 erwähntem Käse nötig, dies in einer Drehzahlstufe 7 über eine Zeitspanne von zehn Sekunden.

Zum Abwiegen des in das Rührgefäß 4 gefüllten Lebensmittels (hier Käse) wird zunächst über eine weitere mechanische Taste 33 im Bedienfeld 3 eine Waagenfunktion aufgerufen. Diese ist in den Figuren 16 bis 19 dargestellt. Sofern bereits weitere Zutaten sich in dem Rührgefäß befinden, ist ein Zuwiegen von Lebensmitteln möglich, indem zuvor ein in dem Display 11 generiertes Tara-Tastenfeld 34 generiert wird. Oberhalb dieses Tastenfeldes 34 ist das Rührgefäß 4 stilisiert dargestellt, weiter bevorzugt mit einer stilisierten, weiter bevorzugt farblich hinterlegten Füllmenge in dem Rührgefäß 4. Weiter ist bevorzugt das aktuell erfasste Gewicht numerisch dargestellt.

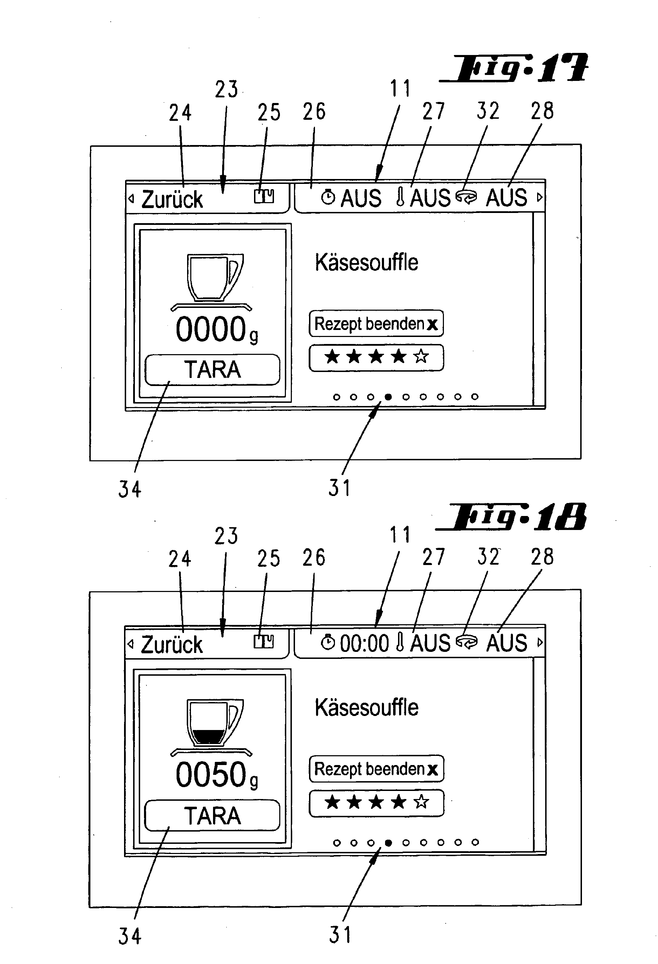

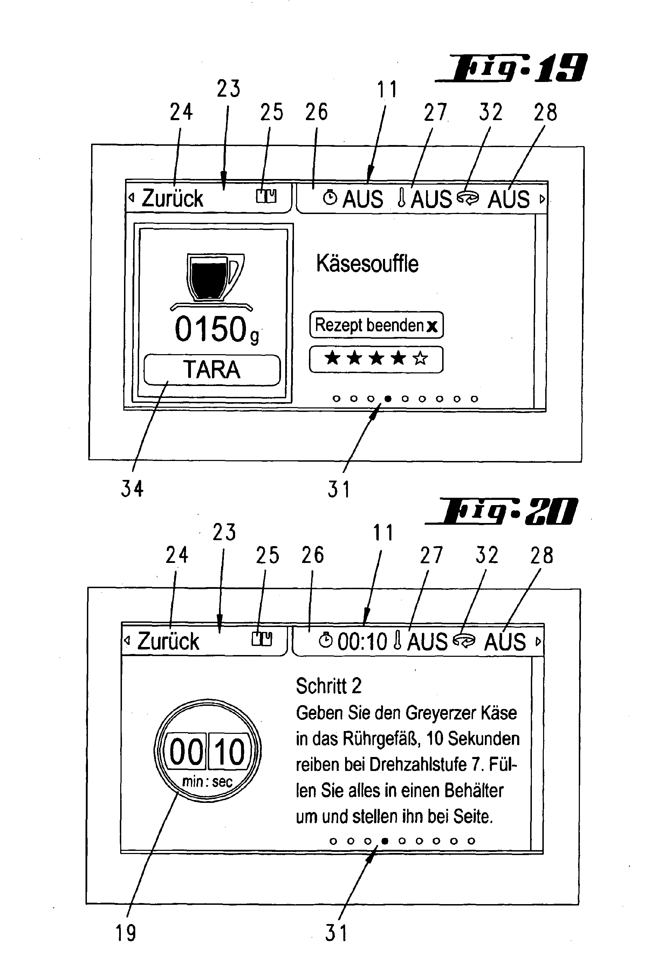

Ausgehend von einem ermittelten Gewicht von beispielsweise 20 Gramm (vgl. Figur 16), beispielsweise durch sich bereits im Rührgefäß 4 befindliche Zutaten, wird die Waagenanzeige zufolge Berühren des Tara-Tastenfeldes 34 auf Null gesetzt (vgl. Figur 17). Entsprechend ist die bevorzugt vorgesehene stilisierte Füllmengenhöhe gelöscht. Hiernach erfolgt das Zugeben des zu wiegenden Lebensmittels (hier beispielsweise Käse) in das Rührgefäß 4, dessen Gewicht entsprechend sowohl numerisch als auch grafisch innerhalb des stilisierten Rührgefäßes 4 angezeigt wird. Figur 19 zeigt das Display 11 unter Anzeige des erreichten Gewichts.

Weiter bevorzugt ist die stilisierte Füllmenge des Rührgefäßes 4 in der Waagenanzeige bevorzugt so gewählt, dass bis zum Erreichen des in dem Rezept vorgegebenen Gewichts die Füllstandanzeige rot erscheint und erst mit Erreichen des Gewichts nach grün wechselt. Weiter bevorzugt ist auch ein Überschreiten des vorgegebenen Gewichts, gegebenenfalls unter Berücksichtigung von Toleranzen, beispielsweise einer Toleranz von ± 5 %, durch eine rote Füllstandsanzeige dargestellt.

Nach erfolgtem Abwiegen der Zutat wird über die Tasten 13 bevorzugt die in dem Rezept vorgegebene Zeit eingestellt. Mit Betätigung einer der Tasten 13 erscheint im linken Bereich des Displays 11 anstelle der zu dem Rezept passenden Grafik ein dem Anzeigebereich 19 entsprechender Anzeigebereich, über welchen die Zeitdauer ablesbar ist. Auch hier ist bevorzugt, dass im Zuge der Zeitstellung die Ziffern oder der Hintergrund der Ziffern farblich dargestellt ist, nämlich weiter bevorzugt rot, solange über die Tasten 13 die in dem Rezept vorgegebene Zeit noch nicht erreicht ist oder diese überschritten ist und in grün bevorzugt bei korrekter Zeiteinstellung.

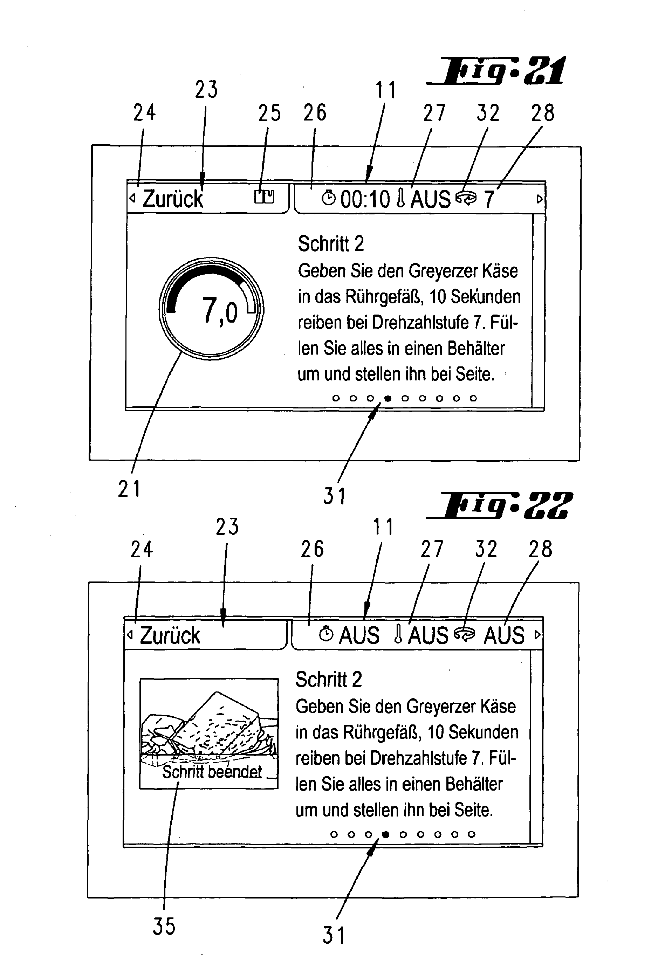

Diese vergrößerte Darstellung der Zeitdauer spiegelt sich weiter wieder in dem zugeordneten verkleinerten Anzeigebereich 26 in der Statuszeile 23, so dass die gewählte Zeit auch dann im Display 11 zumindest verkleinert wiedergegeben ist, wenn insbesondere der linke Displaybereich in eine weitere Grafik wechselt. Dies geschieht beispielsweise durch Betätigung des die Rührwerkdrehstufe einstellenden Drehschalters 12 (vgl. Figur 21). Es erscheint entsprechend im linken Displaybereich der diesbezügliche Anzeigebereich 21, wobei auch hier bevorzugt die numerische Anzeige der Drehzahlstufe und/oder der dazugehörige Laufbalken farblich dargestellt oder hinterlegt sind, weiter bevorzugt in roter Farbe, solange die in dem Rezept vorgegebene Drehzahlstufe nicht erreicht ist oder überschritten ist, während mit Erreichen der vorgegebenen Drehzahlstufe die Anzeige bzw. Teile der Anzeige in grün wechselt.

Wie auch bei der eingestellten Zeitdauer wird auch bei der Rührwerkdrehstufeneinstellung die gewählte Drehstufe zugleich in dem verkleinerten Anzeigebereich 28 in der Statuszeile 23 dargestellt.

Auch hier setzt bevorzugt mit Einstellen der Rührwerkdrehzahl selbsttätig der Zubereitungsprozess ein, wobei während des Zubereitungsprozesses der Benutzer über die Anzeigebereiche in der Statuszeile 23 über die noch verbleibende Restlaufzeit und die weiteren eingestellten Parameter, insbesondere die Rührwerkdrehstufe und gegebenenfalls, sofern voreingestellt, über die Heizleistung informiert wird. Zudem kann auch die Statuszeile 23, insbesondere die einzelnen Anzeigefelder mit einer wechselnden Farbe hinterlegt sein.

Mit Beendigung des Zubereitungsprozesses erscheint bevorzugt im linken Bereich des Displays ein entsprechender Hinweis, der weiter bevorzugt als Tastfeld 35 generiert ist (siehe Fig. 22). Mit Berühren dieses Tastfeldes 35 wird die Meldung bestätigt, wonach bevorzugt die Anzeige auf die nächste Rezeptseite zur Anzeige des nächsten Zubereitungsschrittes wechselt.

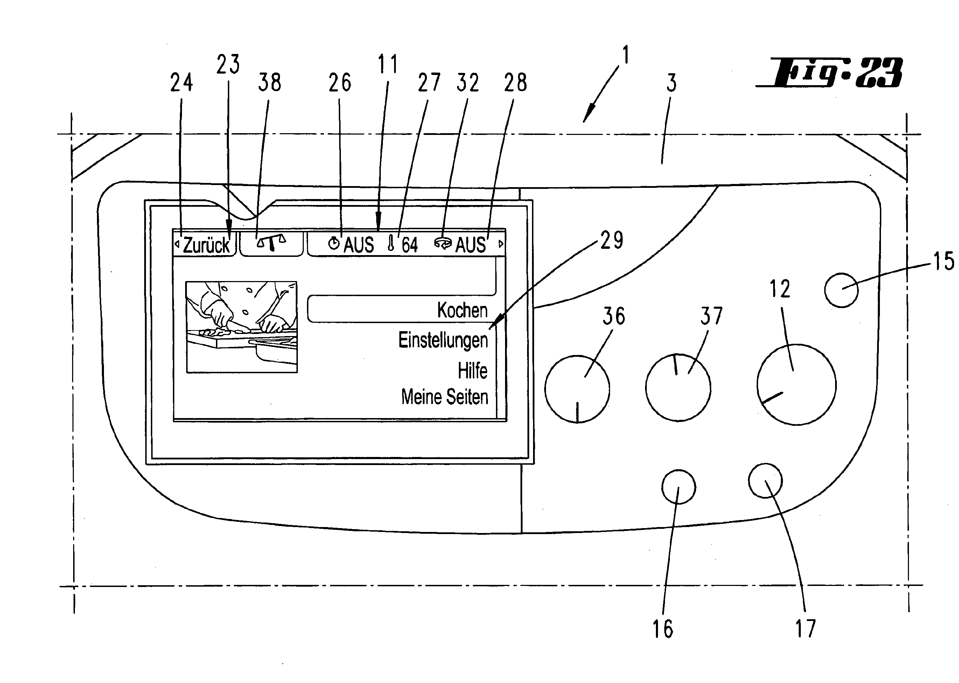

In Figur 23 ist eine zweite Ausführungsform dargestellt. Diese bezieht sich im Wesentlichen auf eine geänderte Anordnung und Ausgestaltung der mechanischen Tasten außerhalb des Displays 11. In dieser Ausführungsform sind zur Einstellung der Zeit und der Temperatur mechanische Drehschalter 36 und 37 vorgesehen. Zur Aktivierung der Waagenfunktion ist ein entsprechendes berührungsempfindliches Tastfeld 38 in der Statuszeile 23 des Displays 11 generiert.

Die weiteren Funktionen, wie insbesondere die Turbofunktion, die Drehrichtungsumkehrfunktion sowie die Teigrührfunktion sind auch in dieser Ausführungsform über Tasten 15 bis 17 aktivierbar.

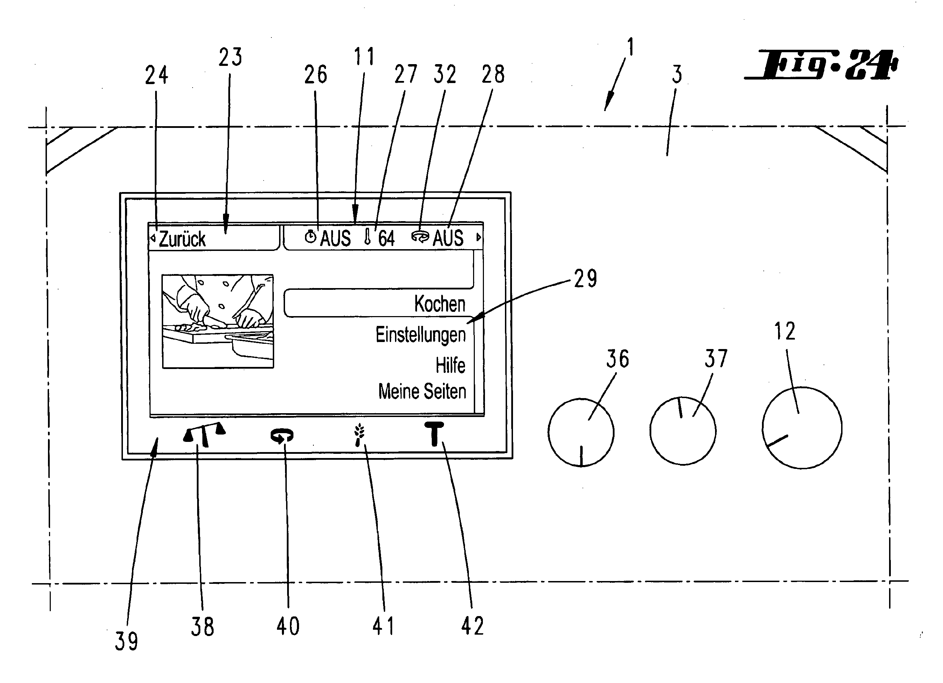

Letztere sind in einer weiteren Ausführungsform gemäß Figur 24 ebenfalls in das Display 11 integriert. In dieser Ausführungsform weist das Display 11 eine stets sichtbare Fußzeile 39 auf mit vier berührungsempfindlichen Tastfeldern zur Aktivierung unterschiedlicher Funktionen. So ist zunächst ein Tastfeld 38 zur Aktivierung der Waagenfunktion vorgesehen, weiter ein Tastfeld 40 zur Aktivierung der Richtungsumkehrfunktion für das Rührwerk 5, ein Tastfeld 41 zur Aktivierung der Teigrührfunktion sowie ein Tastfeld 42 zur Aktivierung der Turbofunktion, wobei bevorzugt alle Tastfelder 35 und 40 bis 42 in Nebeneinanderanordnung vorgesehen sind.

Weiter bevorzugt sind die vorgenannten Tastfelder als berührungsempfindliche Felder außerhalb des Displays angeordnet.

Durch Vorwahl der Turbofunktion wird bevorzugt die Verriegelung des Gefäßdeckels 9 aktiviert, wobei weiter bevorzugt das Auslösen der Turbofunktion über den Drehschalter 12 für die Rührwerkdrehstufe erfolgt. Eine Deaktivierung der Turbofunktion erfolgt durch erneutes Berühren des berührungsempfindlichen Tastfeldes 42 bzw. der Taste 15, wodurch weiter bevorzugt die Verriegelung des Gefäßdeckels 9, weiter bevorzugt unter Berücksichtigung einer Nachlaufzeit des Rührwerkes 5, geöffnet wird. Bei einer Zeitvorwahl wird die Turbofunktion bevorzugt automatisch nach Ablauf der Zeit deaktiviert.

Auch durch die Vorwahl der Teigfunktion wird die Verriegelung aktiviert, wobei auch hier bevorzugt die Auslösung der Teigfunktion über den Drehschalter 12 erfolgt. Eine Deaktivierung der Funktion erfolgt bevorzugt durch erneutes Berühren des berührungsempfindlichen Tastenfeldes 41 bzw. der Taste 17, wodurch weiter bevorzugt auch die Verriegelung des Gefäßdeckels 9 aufgehoben wird. Bei einer Zeitvorwahl wird die Teigfunktion bevorzugt automatisch nach Ablauf der Zeit deaktiviert.

Eine Aktivierung sowie eine Deaktivierung der Drehrichtungsumkehr zufolge Druck auf das entsprechende berührungsempfindliche Tastenfeld 40 bzw. auf die Taste 16 kann bevorzugt vor oder auch weiter bevorzugt während des Betriebs, das heißt bei laufendem Rührwerk 5, erfolgen.

Die Waagenfunktion wird durch Druck auf das entsprechende berührungsempfindliche Tastenfeld 38 bzw. Taste 33 aktiviert bzw. deaktiviert. Die Tara-Einstellung erfolgt bevorzugt über eine berührungsempfindliche Tastfläche 34 im als Touchscreen ausgebildeten Display 11.

Weiter bevorzugt weisen die drei Drehschalter 12, 36 und 37 der zweiten und dritten Ausführungsform keinen Anschlag auf, sind entsprechend frei drehbar, wobei weiter bevorzugt in Abhängigkeit von der Drehgeschwindigkeit bei Betätigung des jeweiligen Drehschalters insbesondere bei der Zeiteinstellung zwischen der Einstellung von Minuten und Sekunden gewählt werden kann.

**Bezugszeichenliste**

| | | | |
|---|---|---|---|
| 1 | Küchenmaschine | 27 | Anzeigebereich |
| 2 | Rührgefäß-Aufnahme | 28 | Anzeigebereich |
| 3 | Bedienfeld | 29 | Menüwahl |
| 4 | Rührgefäß | 30 | Tastfeld |
| 5 | Rührwerk | 31 | Laufleiste |
| 6 | Elektromotor | 32 | Symbol |
| 7 | Boden | 33 | Taste |
| 8 | Haltegriff | 34 | Tastfeld |
| 9 | Gefäßdeckel | 35 | Tastfeld |
| 10 | Netzanschlusskabel | 36 | Drehschalter |
| 11 | Display | 37 | Drehschalter |
| 12 | Drehschalter | 38 | Tastfeld |
| 13 | Taste | 39 | Fußzeile |
| 14 | Taste | 40 | Tastfeld |
| 15 | Taste | 41 | Tastfeld |
| 16 | Taste | 42 | Tastfeld |
| 17 | Taste | | |
| 18 | Taste | | |
| 19 | Anzeigebereich | | |
| 20 | Anzeigebereich | | |
| 21 | Anzeigebereich | | |
| 22 | Tastfeld | | |
| 23 | Statuszeile | | |
| 24 | Tastfeld | | |
| 25 | Tastfeld | | |
| 26 | Anzeigebereich | | |

## Patentansprüche

1. Über ein als Touchscreen ausgebildetes Display (11) zu betätigende Küchenmaschine (1), mit einer nach einem Einschalten der Küchenmaschine (1) erscheinenden ersten Displayanzeige mit zwei oder mehr unterschiedlichen, Stellgrößen wiedergebenden Anzeigebereichen (19 bis 21), wobei jeder Anzeigebereich (19 bis 21) eine gesonderte Stellgröße wiedergibt und jede diesem Anzeigebereich (19 bis 21) zugeordnete Stellgröße nur durch einen außerhalb des Displays (11) angeordneten, mechanisch zu betätigenden Schalter einstellbar ist, wobei die Küchenmaschine (1) ein Rührgefäß (4) aufweist und in dem Rührgefäß (4) ein Rührwerk (5) vorgesehen ist und das Rührgefäß (4) insbesondere bodenseitig aufheizbar ist, wobei weiter ein Betrieb der Küchenmaschine (1) bezogen auf eine kombinierte Heiz- und Rührwerkfunktion nur möglich ist, wenn die Stellgrößen Rührwerkdrehzahl, Heizleistung und Zeitdauer vorgewählt sind, über die Einstellung von Parametern, über welche das Rührwerk und/oder die Heizung mit der vorgewählten Drehzahl bzw. Temperatur arbeitet, wobei aber auch ohne eine gewählte Stellgröße das Display (11) als Touchscreen zum Aufrufen und/oder Ablaufen von Programmen nutzbar ist, wobei die Küchenmaschine eine Turbofunktion für das Rührwerk (5) aufweist, **dadurch gekennzeichnet, dass** die Turbofunktion durch eine Touchscreen-Betätigung auswählbar und nur durch Betätigen eines mechanischen Drehzahlwählers aktivierbar ist.

2. Küchenmaschine nach Anspruch 1, **dadurch gekennzeichnet, dass** zufolge einer Touchscreen-Betätigung die Anzeigebereiche (19 bis 21) für die Stellgrößen verkleinert werden und/oder an dem Rand des Displays (11) erscheinen.

3. Küchenmaschine nach einem der vorangehenden Ansprüche, **dadurch gekennzeichnet, dass** das Display (11) eine Scroll-Möglichkeit aufweist, wobei der Scroll-Fortschritt zugleich durch eine sich mit jedem Bild ändemde Laufleiste (31) wiedergegeben ist.

4. Küchenmaschine nach Anspruch 3, **dadurch gekennzeichnet, dass** die Laufleiste (31) durch eine wandernde Helligkeit gegeben ist und/oder bevorzugt, dass die Helligkeit punktförmig ist.

5. Küchenmaschine nach einem der vorangehenden Ansprüche, **dadurch gekennzeichnet, dass** die Küchenmaschine (1) eine Waagenfunktion aufweist und dass die Waagenfunktion durch eine Touchscreen-Betätigung aktivierbar ist.

6. Küchenmaschine nach einem der vorangehenden Ansprüche, **dadurch gekennzeichnet, dass** die Küchenmaschine (1) eine Turbofunktion für das Rührwerk (5) aufweist und dass die Turbofunktion durch eine Touchscreen-Betätigung aktivierbar ist.

7. Küchenmaschine nach der vorangehenden Ansprüche, **dadurch gekennzeichnet, dass** die Küchenmaschine (1) eine Teigrührfunktion für das Rührwerk (5) aufweist und dass die Teigrührfunktion durch eine Touchscreen-Betätigung aktivierbar ist.

8. Küchenmaschine nach Anspruch 7, **dadurch gekennzeichnet, dass** die Richtungsumkehr- und die Teigrührfunktion nur in Abhängigkeit mit einer Zeitdauer- und Rührwerkeinstellung auf die Drehrichtung oder Drehzahl des Rührwerks (5) einwirkt.

9. Küchenmaschine nach einem der vorangehenden Ansprüche, **dadurch gekennzeichnet, dass** die Erscheinungsform des Displays (11) zeitlich einer dieser entsprechenden Funktionseinstellung der Küchenmaschine (1) entspricht.

## Claims

1. Kitchen appliance (1) to be actuated by a display (11) designed as a touch screen, comprising a first screen display which appears when the kitchen appliance (1) is switched on and has two or more different display regions (19 to 21) showing control variables, each display region (19 to 21) showing a separate control variable and it only being possible to set each of these control variables assigned to said display region (19 to 21) by a switch which is arranged outside of the display (11) and has to be actuated mechanically, the kitchen appliance (1) comprising a mixing vessel (4) and a mixing unit (5) being provided in the mixing vessel (4) and the mixing vessel (4) being heatable, in particular on its base side, it further only being possible to operate the kitchen appliance (1) with a combined heating and mixing function if the control variables of mixing unit speed, heating performance and duration are preselected by setting parameters according to which the mixing unit and/or the heating system function at the predetermined speed or temperature, it also being possible, however, to use the display (11) as a touch screen for calling up and/or executing programs without a selected control variable, the kitchen appliance having a turbo function for the mixing unit (5), **characterised in that** the turbo function can be selected by touch screen actuation and can only be activated by actuating a mechanical speed selector.

2. Kitchen appliance according to claim 1, **characterised in that**, according to a touch screen actuation, the display regions (19 to 21) for the control variables can be made smaller and/or can appear around the edge of the display (11).

3. Kitchen appliance according to any of the preceding claims, **characterised in that** the display (11) has a scroll option, the progress of the scrolling being shown simultaneously by a scroll bar (31) which changes with each image.

4. Kitchen appliance according to claim 3, **characterised in that** the scroll bar (31) is provided by a moving brightness and/or preferably **in that** the brightness is punctiform.

5. Kitchen appliance according to any of the preceding claims, **characterised in that** the kitchen appliance (1) has a weighing function and **in that** the weighing function can be activated by touch screen actuation.

6. Kitchen appliance according to any of the preceding claims, **characterised in that** the kitchen appliance (1) has a turbo function for the mixing unit (5) and **in that** the turbo function can be activated by touch screen actuation.

7. Kitchen appliance according to any of the preceding claims, **characterised in that** the kitchen appliance (1) has a dough-mixing function for the mixing unit (5) and **in that** the dough-mixing function can be activated by touch screen actuation.

8. Kitchen appliance according to claim 7, **characterised in that** the direction-reversing and dough-mixing function only influences the direction of rotation or speed of the mixing unit (5) depending on a setting of the duration and of the mixing unit.

9. Kitchen appliance according to any of the preceding claims, **characterised in that** the appearance of the display (11) corresponds temporally to one of these corresponding function settings of the kitchen appliance (1).

## Revendications

1. Robot de cuisine (1) commandé par le biais d'un afficheur (11) formant écran tactile, avec un premier affichage apparaissant à l'allumage du robot de cuisine (1) lequel premier affichage a deux zones d'affichage (19 à 21) différentes ou plus qui affichent des valeurs de réglages, dans lequel chaque zone d'affichage (19 à 21) affiche une autre valeur de réglage et où chaque valeur de réglage affectée à cette zone d'affichage (19 à 21) est réglable par le biais d'un interrupteur actionnable mécaniquement qui est disposé en-dehors de l'afficheur (11), dans lequel le robot de cuisine (1) présente un récipient de mélange (4), un mélangeur (5) étant prévu dans le récipient de mélange (4) et le récipient de mélange (4) pouvant être chauffé en particulier du côté du fond, dans lequel en outre un fonctionnement du robot de cuisine (1) suivant une fonction combinée de chauffage et de mélange n'est possible que si les valeurs de réglage vitesse de rotation du mélangeur, puissance de chauffe et durée sont présélectionnées par le biais du réglage de paramètres par le biais desquels le mélangeur et/ou le chauffage travaille avec la valeur présélectionnée de vitesse de rotation, respectivement de température, dans lequel l'afficheur (11) peut aussi être utilisé pour appeler ou exécuter des programmes même sans valeur de réglage sélectionnée, dans lequel le robot de cuisine présente une fonction turbo pour le mélangeur (5), **caractérisé en ce que** la fonction turbo est sélectionnable par un actionnement de l'écran tactile et activable uniquement par actionnement d'un sélecteur mécanique de vitesse de rotation.

2. Robot de cuisine selon la revendication 1, **caractérisé en ce qu'**en suite d'un actionnement de l'écran tactile, les zones d'affichage (19 à 21) des valeurs de réglage sont rapetissées et/ou apparaissent au bord de l'afficheur (11).

3. Robot de cuisine selon l'une des revendications précédentes, **caractérisé en ce que** l'afficheur (11) présente une possibilité de défilement, dans lequel la progression du défilement est rendue en même temps par une barre de défilement (31) se modifiant avec chaque image.

4. Robot de cuisine selon la revendication 3, **caractérisé en ce que** la barre de défilement (31) est rendue par une luminosité qui se déplace et/ou de préférence, que la luminosité est sous forme de point.

5. Robot de cuisine selon l'une des revendications précédentes, **caractérisé en ce que** le robot de cuisine (1) présente une fonction de pesée et que la fonction de pesée est activable par actionnement de l'écran tactile.

6. Robot de cuisine selon l'une des revendications précédentes, **caractérisé en ce que** le robot de cuisine (1) présente une fonction turbo pour le mélangeur (5) et que la fonction turbo est activable par un actionnement de l'écran tactile.

7. Robot de cuisine selon l'une des revendications précédentes, **caractérisé en ce que** le robot de cuisine (1) présente une fonction de mélange de pâte pour le mélangeur (5) et que la fonction de mélange de pâte est activable par un actionnement de l'écran tactile.

8. Robot de cuisine selon la revendication 7, **caractérisé en ce que** la fonction d'inversion de sens et de mélange de pâte n'agit que sur le sens de rotation ou sur la vitesse de rotation en dépendance d'un réglage de la durée et du mélangeur.

9. Robot de cuisine selon l'une des revendications précédentes, **caractérisé en ce que** l'apparence de l'afficheur (11) correspond du point de vue temporel à une fonction correspondante du robot de cuisine (1) qui est sélectionnée.
